(19) Europäisches Patentamt
European Patent Office
Office européen des brevets

(11) **EP 3 659 252 B1**

(12) **EUROPÄISCHE PATENTSCHRIFT**

(45) Veröffentlichungstag und Bekanntmachung des Hinweises auf die Patenterteilung:
**17.11.2021 Patentblatt 2021/46**

(51) Int Cl.:
***H02P 6/18*** *(2016.01)*

(21) Anmeldenummer: **18733269.7**

(22) Anmeldetag: **22.06.2018**

(86) Internationale Anmeldenummer:
**PCT/EP2018/066832**

(87) Internationale Veröffentlichungsnummer:
**WO 2019/020295 (31.01.2019 Gazette 2019/05)**

(54) **VERFAHREN ZUR BESTIMMUNG EINER ROTORLAGE EINER ELEKTRISCHEN, ROTIERENDEN MASCHINE SOWIE EINE ELEKTRISCHE, ROTIERENDE MASCHINE ZUR DURCHFÜHRUNG EINES SOLCHEN VERFAHRENS**

METHOD FOR DETERMINING THE ROTOR POSITION OF AN ELECTRIC ROTATING MACHINE, AND AN ELECTRIC ROTATING MACHINE FOR CARRYING OUT A METHOD OF THIS KIND

PROCÉDÉ DE DÉTERMINATION D'UNE POSITION DE ROTOR D'UNE MACHINE ROTATIVE ÉLECTRIQUE ET MACHINE ROTATIVE ÉLECTRIQUE POUR LA MISE EN ŒUVRE D'UN TEL PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.07.2017 DE 102017213069**

(43) Veröffentlichungstag der Anmeldung:
**03.06.2020 Patentblatt 2020/23**

(73) Patentinhaber: **Robert Bosch GmbH**
**70442 Stuttgart (DE)**

(72) Erfinder:
• **ROETZER, Marco**
**78736 Epfendorf (DE)**
• **VOLLMER, Ulrich**
**73235 Weilheim (DE)**

(56) Entgegenhaltungen:
**DE-A1-102009 039 672      DE-U1-202016 106 678**
**US-A1- 2011 101 906**

**EP 3 659 252 B1**

**Beschreibung**

Stand der Technik

Die Erfindung betrifft ein Verfahren zur Bestimmung einer Rotorlage einer rotierenden, elektrischen Maschine.

Solch ein Verfahren ist beispielsweise in der Offenlegungsschrift DE 10 2009 039 672 A1 offenbart. Hierbei wird eine geberlose Regelung offenbart, welche versucht die Rotorposition ohne Verwendung eines Positionssensors zu ermitteln. Dabei kommen bei geringen Drehzahlen sogenannte anisotropiebasierte Verfahren zum Einsatz, welche über die magnetische Anisotropie der Maschine die Rotorlage bestimmen. Bei hochdynamischen Antrieben wird zur Erzeugung der einstellbaren Phasenspannung der elektrischen Maschinen in der Regel ein Wechselrichter mit Pulsweitenmodulation (PWM) verwendet. Die Steuersignale des Wechselrichters werden mit Hilfe einer Raumzeigermodulation berechnet, welche die von der Regelung ermittelten vorgegebenen Spannungen in PWM-Tastverhältnisse umrechnet. Die vorgegebenen Spannungen werden vom Regler beispielsweise in Abhängigkeit von der Rotorlage und den erfassten Phasenströmen sowie von gewissen Anforderungen an die elektrische Maschine, z. B. Drehzahl oder Drehmoment, bestimmt. Bei gängigen anisotropiebasierten Verfahren wird durch gezielte Veränderung der vorgegebenen Spannungen zwischen zwei Reglerabtastschritten eine lageabhängige Stromänderung produziert, indem zusätzlich zu der von der Regelung vorgegebenen Spannung hochfrequente Spannungen induziert werden. Die sich dadurch ergebende Stromänderung kann daraufhin durch Strommessungen der jeweiligen Phasenströme der elektrischen Maschine zu bestimmten Zeitpunkten erfasst werden. In Abhängigkeit von den erfassten Phasenströmen und den eingespeisten Spannungen kann anschließend die Rotorlage bestimmt werden, wie dies beispielsweise in der oben genannten Offenlegungsschrift offenbart ist.

Zudem offenbaren die Schriften US 2011/101906 A1 und DE 202016106678 U1 Verfahren zur Bestimmung einer Rotorlage einer rotierenden, elektrischen Maschine.

Offenbarung der Erfindung

Die Erfindung wird durch die Merkmale des unabhängigen Anspruchs 1 definiert.

Die Erfindung betrifft ein Verfahren zur Bestimmung einer Rotorlage einer elektrischen, rotierenden Maschine, wobei die elektrische Maschine wenigstens ein erstes, mehrphasiges Teilsystem und ein zweites, mehrphasiges Teilsystem aufweist, wobei jedes Teilsystem eine Wicklungsgruppe und einen PWM-gesteuerten Wechselrichter zur Speisung der jeweiligen Wicklungsgruppe aufweist, wobei die Wicklungsgruppen des wenigstens ersten und zweiten Teilsystems im Wesentlichen um 360° elektrisch zueinander versetzt angeordnet sind. Das Verfahren umfasst die Verfahrensschritte:

a. Verändern von durch einen Regler zur Ansteuerung der Teilsysteme vorgegebenen Spannungen zwischen einem ersten Reglerabtastschritt und einem zweiten Reglerabtastschritt, indem für jedes Teilsystem jeweils hochfrequente Spannungen zusätzlich zu den vorgegebenen Spannungen eingespeist werden, um jeweils eine lageabhängige Stromänderung zu erzielen, wobei die hochfrequenten Spannungen des wenigstens ersten und des zweiten Teilsystems derartig gewählt werden, dass sie eine verschobene Phasenlage zueinander aufweisen, und wobei die vorgegebenen Spannungen des wenigstens ersten und zweiten Teilsystems derartig gewählt werden, dass sie eine im Wesentlichen gleiche Phasenlage zueinander aufweisen,

b. PWM-synchrones Messen wenigstens eines ersten Phasenstroms und eines zweiten Phasenstroms für jedes Teilsystem zwischen dem ersten Reglerabtastschritt und dem zweiten Reglerabtastschritt, um je einen Stromverlauf der Phasenströmen zu erhalten,

c. Bestimmen der Rotorlage in Abhängigkeit von den im Verfahrensschritt b erhaltenen Stromverläufen und den im Verfahrensschritt a eingespeisten hochfrequenten Spannungen.

Vorteilhaft ist hierbei, dass aufgrund der verschobenen Phasenlage der hochfrequenten Spannungen der Teilsysteme ein durch das anisotropiebasierte Verfahren, und hierbei insbesondere durch die Einspeisung der hochfrequenten Spannungen, erzeugter Drehmomentrippel der elektrischen Maschine reduziert werden kann. Hierdurch kann wiederum eine Geräuschentwicklung verringert werden, welche beim Betrieb der elektrischen Maschine durch die Rotorlagenbestimmung erzeugt wird.

Durch das Verfahren kann somit eine geberlose Bestimmung der Rotorlage erfolgen, welche die Eigenschaften der elektrischen Maschine während des Betriebs nur vernachlässigbar verschlechtert. Außerdem ist es erfindungsgemäß auch möglich, dass durch das Verfahren das Ergebnis eines vorhandenen Rotorlagesensors validiert wird.

Die Teilsysteme der elektrischen Maschine sind hierbei insbesondere jeweils dreiphasig ausgestaltet und weisen unter anderem jeweils eine Wicklungsgruppe und einen PWM-gesteuerten Wechselrichter zur Speisung der jeweiligen Wicklungsgruppe auf.

Zudem wäre es denkbar, dass die elektrische Maschine zusätzlich zu dem ersten und zweiten Teilsystem noch ein drittes oder viertes Teilsystem oder gar noch eine beliebige Anzahl weiterer Teilsysteme aufweist, welche insbesondere dann ebenfalls jeweils um 360° elektrisch zueinander versetzt angeordnet sind.

Unter im Wesentlichen gleiche Phasenlage der vorgegebenen Spannungen des ersten und zweiten Teilsystems ist dabei eine maximale Abweichung von einigen Grad zu verstehen, welche beispielsweise durch äußere Störeinflüsse oder herstellungsbedingten Toleranzen der jeweiligen Teilsysteme bedingt ist.

Unter 360° elektrisch zueinander versetzt ist zu verstehen, dass die Wicklungsgruppen zweier verschiedener Teilsystem mechanisch um ein ganzes Vielfaches von 360° geteilt durch die Anzahl der Pole der elektrischen Maschine zueinander versetzt angeordnet sind. Wobei ein Vielfaches auch 1 bedeuten kann.

In einer Ausgestaltung des erfindungsgemäßen Verfahrens ist vorgesehen, dass im Verfahrensschritt a die hochfrequenten Spannungen des wenigstens ersten und zweiten Teilsystems derartig gewählt werden, dass die hochfrequenten Spannungen eine um ein n-faches von 360° geteilt durch die Anzahl der Teilsysteme verschobene Phasenlage zueinander aufweisen, wobei n eine ganze Zahl ist.

Vorteilhaft ist hierbei, dass durch diese entsprechende Verschiebung der Phasenlage die Geräuschentwicklung weiter optimiert werden kann, indem beispielsweise bei zwei Teilsystemen die hochfrequenten Spannungen derart gewählt werden, dass diese im rotorflussorientierten Koordinatensystem entgegengesetzt ausgerichtet sind. Somit kann ein sich daraus ergebender Gesamtspannungsvektor vorteilhafterweise recht klein werden, wodurch der entsprechende Drehmomentrippel der elektrischen Maschine gering gehalten werden kann. Folglich wird durch die derartige Wahl der hochfrequenten Spannungen die Geräuschentwicklung durch das erfindungsgemäße Verfahren zur Bestimmung der Rotorlage weiter verringert.

Bei zwei Teilsystemen können die hochfrequenten Spannungen beispielsweise eine Phasenlage von 180° zueinander auf. Bei drei Teilsystemen wäre beispielsweise eine Verschiebung der Phasenlage der hochfrequenten Spannungen um je 120° pro Teilsystem möglich. Bei vier Teilsystemen gibt es beispielsweise die Möglichkeit, dass die Teilsysteme eine Phasenlage von 0°, 90°, 180° und 270° zueinander aufweisen. Es ist jedoch auch möglich dass die hochfrequenten Spannungen bei je zwei Teilsysteme in gleicher Richtung injiziert werden und bei den anderen beiden Teilsystemen mit einer um 180° verschobenen Phasenlage im Vergleich zu den ersten beiden Teilsystemen injiziert werden.

Gemäß einer Ausgestaltung des erfindungsgemäßen Verfahrens ist vorgesehen, dass im Verfahrensschritt a Amplituden der hochfrequenten Spannungen des wenigstens ersten und zweiten Teilsystems derartig gewählt werden, dass eine Summe aller Spannungszeiger der hochfrequenten Spannungen der Teilsysteme im rotorflussorientierten Koordinatensystem einen Nullvektor ergibt. Vorteilhaft ist hierbei, dass durch die zusätzliche Einstellung der hochfrequenten Spannungen bezüglich ihrer Amplitude, die Erzeugung eines Drehmomentrippels aufgrund der Bestimmung der Rotorlage sogar komplett vermieden werden kann. Der Nullvektor bedeutet, dass bei dreiphasigen Teilsystemen die Summe der hochfrequenten Spannungen aller ersten Phasen, die Summe der hochfrequenten Spannungen aller zweiten Phasen sowie die Summe der hochfrequenten Spannungen aller dritten Phasen Null ergibt.

Gemäß einer Ausgestaltung des erfindungsgemäßen Verfahrens ist vorgesehen, dass im Verfahrensschritt c für das wenigstens erste und zweite Teilsystem die jeweilige Stromänderung, welche durch das Verändern der vorgegebenen Spannungen entsteht, in Abhängigkeit des in Verfahrensschritt b erhaltenen Stromverlaufs der Phasenströme bestimmt wird, wobei der Stromverlauf in einen ersten Strom, welcher ohne Veränderung der vorgegebenen Spannung fließen würde, und einen zweiten Strom, welcher durch das Einspeisen der hochfrequenten Spannungen erzeugt wird, unterteilt wird, und wobei in Abhängigkeit von der jeweilig bestimmten Stromänderung die Rotorlage bestimmt wird. Die entsprechende Bestimmung der Rotorlage ist beispielsweise im zuvor genannten Stand der Technik offenbart. Vorteilhaft ist hierbei, dass dies eine einfache Möglichkeit darstellt, die Rotorlage zu bestimmen. Hierdurch kann der notwendige Rechenaufwand gering gehalten werden und die Rotorlage-Bestimmung schnell erfolgen.

In einer Ausgestaltung des erfindungsgemäßen Verfahrens ist vorgesehen, dass der zweite Strom, welcher durch das Einspeisen der hochfrequenten Spannungen erzeugt wird, bestimmt wird, indem eine Differenz der in Verfahrensschritt b erhaltenen Phasenströme des wenigstens ersten und des zweiten Teilsystems gebildet wird. Vorteilhaft ist hierbei, dass aufgrund der gleichen Phasenlage der vorgegebenen Spannungen der Teilsysteme sich der erste Strom, welcher ohne Veränderung der vorgegebenen Spannungen fließen würde, bei der Differenzbildung gegenseitig aufhebt und somit sehr einfach der zweite Strom, welcher durch das Einspeisen der hochfrequenten Spannungen erzeugt wird, bestimmbar ist. Der zweite Strom hebt sich dagegen aufgrund der verschobenen Phasenlage der hochfrequenten Spannungen nicht gegenseitig auf.

Gemäß einer Ausgestaltung des erfindungsgemäßen Verfahrens ist vorgesehen, dass der erste Strom, welcher ohne Veränderung der vorgegebenen Spannung fließen würde, bestimmt wird, indem ein Mittelwert der in Verfahrensschritt b erhaltenen Phasenströme des wenigstens ersten und zweiten Teilsystems gebildet wird. Vorteilhaft ist hierbei, dass aufgrund der verschobenen Phasenlage der hochfrequenten Spannungen der Teilsysteme sich der zweite Strom, welcher durch das Einspeisen der hochfrequenten Spannungen erzeugt wird, bei der Mittelwertbildung zumindest in gewissem Maße gegenseitig aufhebt und somit sehr einfach der erste Strom, welcher ohne Veränderung der vorgegebenen Spannungen fließen würde, bestimmbar ist. Entsprechend hebt sich der erste Strom aufgrund der gleichen Phasenlage der vorgegebenen Spannungen nicht gegenseitig auf.

Gemäß einer Ausgestaltung des erfindungsgemäßen Verfahrens ist vorgesehen, dass eine Reglerabtastperiode, welche die Dauer zwischen dem ersten Reglerabtastschritt und dem zweiten Reglerabtastschritt darstellt, größer als eine PWM-Periode ist.

Vorteilhaft ist hierbei, dass durch das PWM-synchrone Messen der Phasenströme mehr Messwerte erfasst werden, als eigentlich zur Bestimmung der Rotorlage notwendig sind. Hierdurch kann somit das Signal-Rausch-Verhältnis verbessert werden.

Dabei kann angenommen werden, dass die Differenz der Phasenströme, welche zur Berechnung der hochfrequenten Ströme verwendet wird, einen niederfrequenten Fehler besitzt, welcher geschätzt und kompensiert wird. Dieser niederfrequente Fehleranteil ergibt sich beispielsweise aus herstellungsbedingten Toleranzen der jeweiligen Teilsysteme oder auch Wicklungsgruppen. Die Schätzung des Fehlers kann insbesondere mit Hilfe der Methode der kleinsten Fehlerquadrate durchgeführt werden. Es kann hierbei angenommen werden, dass die durch den Regler vorgegebenen Spannungen zwischen zwei Reglerabtastschritten konstant sind. Der niederfrequente Fehleranteil kann dabei in Zeitabschnitten in denen die durch den Regler vorgegebenen Spannungen konstant sind, über eine Modellfunktion, bevorzugt durch ein Polynom niedriger Ordnung, beschrieben werden. Die hochfrequenten Ströme, welche durch die Einspeisung der hochfrequenten Spannungen entstehen, können zudem durch eine lineare Gleichung abhängig von der rotorlageabhängigen inversen Induktivität oder abhängig von dem Rotorlagefehler beschrieben werden. Während die vorgegebenen Spannungen konstant sind, kann somit der zeitliche Verlauf der Differenz der Phasenströme mit Hilfe eines linearen Gleichungssystems beschrieben werden. Wird nun die Reglerabtastfrequenz, welche den Kehrwert der Reglerabtastperiode darstellt, deutlich geringer gewählt als die PWM-Frequenz, so werden deutlich mehr Phasenstrommesswerte erfasst, als für die Lösung des linearen Gleichungssystems benötigt werden. Hier kann nun die Methode der kleinsten Fehlerquadrate verwendet werden, um das überbestimmte Gleichungssystem zu lösen. Dies bedeutet, dass je kleiner die Reglerabtastfrequenz im Vergleich zur PWM-Frequenz gewählt wird, umso besser wird das Signal-Rausch-Verhältnis der bestimmten Lösungsparameter. Gemäß einer Ausgestaltung des erfindungsgemäßen Verfahrens ist vorgesehen, dass die hochfrequenten Spannungen einen Frequenzbereich aufweisen, welcher sich oberhalb einer Resonanzfrequenz von an einem Gehäuse der elektrischen Maschine erzeugbaren mechanischen Schwingungen befindet. Vorteilhaft ist hierbei, dass durch die Auswahl eines entsprechenden Frequenzbereichs für die hochfrequenten Spannungen eine Geräuschentwicklung aufgrund der Einspeisung der hochfrequenten Spannungen in die jeweiligen Teilsysteme vermindert werden kann oder gar ganz ausbleibt.

Durch die Einspeisung der hochfrequenten Spannungen wirken auf den Stator der elektrischen Maschine radial hochfrequente Kräfte, welche im Wesentlichen eine gleiche Frequenz wie die hochfrequenten Spannungen aufweisen. Je nach Topologie der elektrischen Maschine und Wahl der hochfrequenten Spannungen haben die radialen Kräfte, welche durch die hochfrequenten Spannungen erzeugt werden, unterschiedliche räumliche Ordnungen. Durch die Kräfte wird der Stator zum Schwingen angeregt. Die Moden der mechanischen Schwingung sind in der Regel identisch mit der räumlichen Ordnungen der Kräfte, wobei die Resonanzfrequenz für jede Mode unterschiedlich ist. Folglich ist es von Vorteil, wenn der Frequenzbereich der hochfrequenten Spannungen oberhalb der Resonanzfrequenz der angeregten Mode liegt, um somit die mechanischen Schwingungen zu minimieren.

Die Erfindung betrifft zudem eine elektrische, rotierende Maschine mit wenigstens einem ersten mehrphasigen Teilsystem und einem zweiten mehrphasigen Teilsystem, definiert durch die Merkmale des unabhängigen Anspruchs 9.

Gemäß einer Ausgestaltung der erfindungsgemäßen elektrischen Maschine ist vorgesehen, dass die Wicklungsgruppen des wenigstens ersten und zweiten Teilsystems derartig miteinander verschaltet sind, dass eine in einem rotorflussorientierten Koordinatensystem im Wesentlichen konstante Induktivitätsmatrix gegeben ist.

Vorteilhaft ist hierbei, dass eine einfache Bestimmung der Rotorlage ermöglicht wird. Dies liegt darin begründet, dass es verschiedene Möglichkeiten gibt, wie die Wicklungen der einzelnen Wicklungsgruppen der Teilsysteme miteinander verschaltet werden können. Je nach Verschaltung der Teilsystem bzw. der Wicklungsgruppen weist die elektrische Maschine unterschiedliche Symmetrieeigenschaften auf. Dies hat vor allem Auswirkungen auf die magnetischen Kopplungen zwischen den einzelnen Phasen. So besitzen im rotorflussorientierten Koordinatensystem die Phasen- und Koppelinduktivitäten einer elektrischen Maschine mit separierten Teilsystemen zusätzliche mathematische Ordnungen gegenüber einer Maschine mit verwobenen Wicklungen. Diese zusätzlichen Ordnungen erschweren wiederum die Rotorlagebestimmung mittels eines anisotropiebasierten Verfahrens, da die zusätzlichen Ordnungen bekannt sein müssen, um von einer hochfrequenten Stromänderung auf die Rotorlage schließen zu können. Durch eine Verschaltung der Wicklungsgruppen, welche zu einer konstanten Induktivitätsmatrix der elektrischen Maschine führt, können dabei die zusätzlichen Ordnungen minimiert und somit die Bestimmung der Rotorlage einfach gehalten werden.

Gemäß einer Ausgestaltung der erfindungsgemäßen elektrischen Maschine ist vorgesehen, dass das wenigstens erste und zweite Teilsystem einen gemeinsamen Spannungszwischenkreis aufweisen.

Vorteilhaft ist hierbei, dass zusätzlich zum Drehmomentrippel auch ein Batteriestromrippel, welcher aufgrund der Einspeisung der hochfrequenten Spannungen in die jeweiligen Teilsysteme erzeugt wird und in den Zuleitungen zu den Wechselrichtern fließt, minimiert werden kann.

Zeichnungen

Fig. 1 zeigt ein Ausführungsbeispiel eines erfindungsgemäßen Verfahrens zur Bestimmung einer Rotorlage einer elektrischen, rotierenden Maschine.

Fig. 2 zeigt ein Ausführungsbeispiel einer erfindungsgemäßen elektrischen, rotierenden Maschine, welche dazu eingerichtet ist, ein erfindungsgemäßes Verfahren durchzuführen.

Fig. 3a und 3b zeigen zwei verschiedene Anordnungen von Wicklungsgruppen eines ersten und zweiten Teilsystems einer elektrischen Maschine beispielsweise nach Fig. 2 im Detail.

Beschreibung von Ausführungsbeispielen

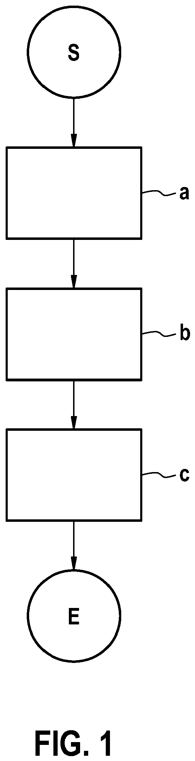

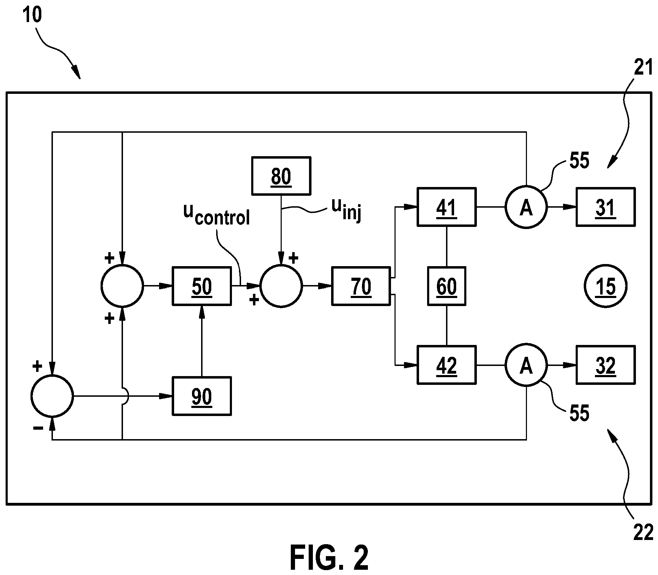

Fig. 1 zeigt ein Ausführungsbeispiel eines erfindungsgemäßen Verfahrens zur Bestimmung einer Rotorlage einer elektrischen, rotierenden Maschine. Die elektrische Maschine 10, beispielsweise nach Fig. 2, weist dabei wenigstens ein erstes, mehrphasiges Teilsystem 21 und ein zweites, mehrphasiges Teilsystem 22 aufweist. Die Teilsysteme 21, 22 sind insbesondere dreiphasig ausgestaltet. Des Weiteren weist wiederum jedes Teilsystem 21, 22 eine Wicklungsgruppe 31, 32 und einen PWM-gesteuerten Wechselrichter 41, 42 zur Speisung der jeweiligen Wicklungsgruppe 31, 32 auf. Die Wicklungsgruppen 31, 32 des wenigstens ersten und zweiten Teilsystems 21, 22 sind im Wesentlichen um 360° elektrisch zueinander versetzt angeordnet.

Bei dem im Ausführungsbeispiel nach Fig. 1 dargestellten Verfahren wird nach dem Start S in einem Verfahrensschritt a für jedes der Teilsysteme 21, 22 zwischen einem ersten Reglerabtastschritt und einem zweiten Reglerabtastschritt durch einen Regler 50 zur Ansteuerung der beiden Teilsysteme 21, 22 vorgegebene Spannungen $u_{control}$ verändert, indem zusätzlich zu den vorgegebenen Spannungen $u_{control}$ hochfrequente Spannungen $u_{inj}$ injiziert werden, um eine lageabhängige Stromänderung zu erzielen. Hierbei werden für jedes Teilsystem 21, 22 die hochfrequenten Spannungen $u_{inj}$ zu den vorgegebenen Spannungen $u_{control}$ addiert und anschließend zur Ansteuerung des jeweiligen Teilsystems 21, 22 in ein PWM-Tastverhältnis umgerechnet. Die hochfrequenten Spannungen $u_{inj}$ des wenigstens ersten und des zweiten Teilsystems 21, 22 werden dabei derartig gewählt, dass sie eine verschobene Phasenlage zueinander aufweisen. So können beispielsweise die

hochfrequenten Spannungen $u_{inj}$ des ersten Teilsystems 21 eine um 180° verschobene Phasenlage gegenüber den hochfrequenten Spannungen $u_{inj}$ des zweiten Teilsystems 22 aufweisen. Zudem können die hochfrequenten Spannungen $u_{inj}$ der beiden Teilsysteme 21, 22 bezüglich ihrer Amplitude derartig gewählt werden, dass eine Summe aller Spannungszeiger der hochfrequenten Spannungen $u_{inj}$ der Teilsysteme 21, 22 einen Nullvektor ergibt. Bei einer Phasenverschiebung der hochfrequenten Spannungen $u_{inj}$ der beiden Teilsysteme von 180° können die Amplituden somit identisch gewählt werden, um in Summe einen Nullvektor zu erhalten. Des Weiteren werden die vorgegebenen Spannungen $u_{control}$ des wenigstens ersten und des zweiten Teilsystems 21, 22 derartig gewählt, dass sie eine im Wesentlichen gleiche Phasenlage zueinander aufweisen. Die Dauer zwischen dem ersten Reglerabtastschritt und dem zweiten Reglerabtastschritt kann insbesondere derartig gewählt werden, dass dieser um ein Vielfaches größer ist als die Dauer einer PWM-Periode.

Anschließend an den Verfahrensschritt a wird in einem Verfahrensschritt b für jedes Teilsystem 21, 22 wenigstens ein erster Phasenstrom und ein zweiter Phasenstrom zwischen dem ersten Reglerabtastschritt und dem zweiten Reglerabtastschritt PWM-synchron gemessen, um je einen Stromverlauf aller Phasenströme zu erhalten. Werden bei einer elektrischen Maschine 10 mit dreiphasig ausgestalteten Teilsystemen 21, 22 beispielsweise lediglich der erste Phasenstrom und der zweite Phasenstrom des jeweiligen Teilsystems 21, 22 gemessen, so kann ein dritter Phasenstrom des jeweiligen Teilsystems 21, 22 mittels des ersten Kirchhoff'schen Gesetzes aus dem ersten Phasenstrom und dem zweiten Phasenstrom bestimmt werden:

$$i_c = -i_a - i_b$$

Alternativ kann der dritte Phasenstrom des jeweiligen Teilsystems 21, 22 ebenfalls gemessen werden.

Abschließend wird in einem Verfahrensschritt c die Rotorlage der elektrischen Maschine 10 in Abhängigkeit der in Verfahrensschritt b erhaltenen Stromverläufen und den im Verfahrensschritt a eingespeisten hochfrequenten Spannungen $u_{inj}$ bestimmt und anschließend das Verfahren beendet. Die Rotorlage kann hierbei insbesondere bestimmt werden, indem die Stromänderung bestimmt wird, welche durch das Verändern der vorgegebenen Spannung $u_{control}$ im Verfahrensschritt a entsteht. Dabei erfolgt die Bestimmung der Stromänderung in Abhängigkeit des in Schritt b erhalten Stromverlaufs der Phasenströme und der im Verfahrensschritt a eingespeisten hochfrequenten Spannungen $u_{inj}$. Hierfür wird der im Verfahrensschritt b erhaltene Stromverlauf in einen ersten Strom, welcher ohne Veränderung der vorgegebenen Spannung $u_{control}$ fließen würde, und einen zweiten Strom, welcher durch das Verändern der Spannung $u_{control}$ erzeugt wird, unterteilt. Der zweite Strom kann beispielsweise bestimm werden, indem eine Differenz der in Verfahrensschritt b erhaltenen Phasenströme des wenigstens ersten und des zweiten Teilsystems 21, 22 gebildet wird. Des Weiteren kann der erste Strom beispielsweise bestimmt werden, indem ein Mittelwert der in Verfahrensschritt b erhaltenen Phasenströme des wenigstens ersten und zweiten Teilsystems 21, 22 gebildet wird.

In einem alternativen, nicht bildlich dargestellten Ausführungsbeispiel kann das Verfahren regelmäßig neu gestartet werden, um fortlaufend die Rotorlage der elektrischen Maschine zu bestimmen.

Fig. 2 zeigt ein Ausführungsbeispiel einer erfindungsgemäßen elektrischen, rotierenden Maschine, welche dazu eingerichtet ist, ein erfindungsgemäßes Verfahren durchzuführen.

Dargestellt ist eine elektrische Maschine 10. Die elektrische Maschine 10 weist einen permanentmagnetischen Rotor 15 auf, welcher von einer Wicklungsgruppe 31 eines ersten, mehrphasigen Teilsystems 21 und einer Wicklungsgruppe 32 eines zweiten, mehrphasigen Teilsystems 22 umgeben ist. Die Teilsysteme 21, 22 sind hierbei insbesondere dreiphasig ausgestaltet, was jedoch bildlich nicht dargestellt ist. Die Wicklungsgruppen 31, 32 sind auf einem bildlich nicht dargestellten Stator derartig angeordnet, dass die Wicklungsgruppen 31, 32 des wenigstens ersten und zweiten Teilsystems 21, 22 im Wesentlichen um 360° elektrisch zueinander versetzt angeordnet sind.

Des Weiteren ist die Wicklungsgruppe 31 des ersten Teilsystems 21 mit einem Wechselrichter 41 verbunden, welcher die Wicklungsgruppe 31 bestromt. Entsprechend ist auch die Wicklungsgruppe 32 des zweiten Teilsystems 22 mit einem Wechselrichter 42 verbunden. Die beiden Wechselrichter 41, 42 der beiden Teilsysteme 21, 22 sind wiederum mit einer PWM-Einheit 70 verbunden, welche die Wechselrichter 41 und 42 entsprechend ansteuert. Hierbei erhält die PWM-Einheit 70 für jedes Teilsystem 21, 22 von einem Regler 50 vorgegebene Spannungen $u_{control}$ und von einer Hochfrequenz-Anregungseinheit 80 hochfrequente Spannungen $U_{inj}$, welche addiert und von der PWM-Einheit 70 in entsprechende PWM-Tastverhältnisse umgerechnet werden. Hierbei sind die hochfrequenten Spannungen $u_{inj}$ des wenigstens ersten und des zweiten Teilsystems 21, 22 derartig gewählt, dass sie eine verschobene Phasenlage zueinander aufweisen. Zudem sind die vorgegebenen Spannungen $u_{control}$ des wenigstens ersten und des zweiten Teilsystems 21, 22 derartig gewählt, dass sie eine im Wesentlichen gleiche Phasenlage zueinander aufweisen. Des Weiteren sind das erste Teilsystem 21 und das zweite Teilsystem 22 mit einem gemeinsamen Spannungszwischenkreis 60 verbunden.

Die elektrische Maschine 10 weist bei dreiphasigen Teilsystemen 21, 22 für wenigstens eine erste Phase und eine zweite Phase eines jeden Teilsystems 21, 22 je eine Strommesssensoreinheit 55 auf. Mittels dieser Strommesssensoreinheit 55 kann ein entsprechender Phasenstrom erfasst werden. Die Werte der erfassten Phasenströme werden dabei sowohl dem Regler 50 als auch einer Rotorlageeinheit 90 zur Verfügung gestellt. Die Rotorlageeinheit 90 ist hierbei dazu eingerichtet, in Abhängigkeit von den entsprechenden Stromverläufen der Phasenströme eine Rotorlage des Rotors 15 zu bestimmen und diese Rotorlage unter anderem an den Regler 50 zu übermitteln. Der Regler 50 ist dazu eingerichtet, in Abhängigkeit von den Stromverläufen der Phasenströme und von der erhaltenen Rotorlage die vorgegebenen Spannungen $u_{control}$ für das erste und zweite Teilsystem 21, 21 zu bestimmen und diese vorgegebenen Spannungen $u_{control}$, wie zuvor bereits beschrieben, an die PWM-Einheit 70 zu übermitteln.

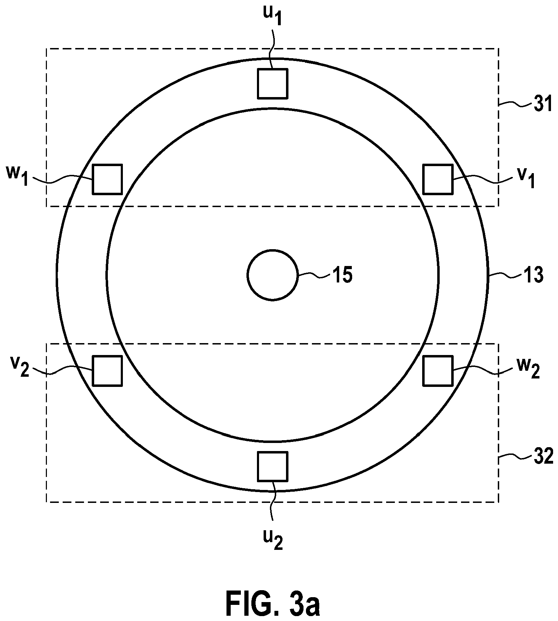

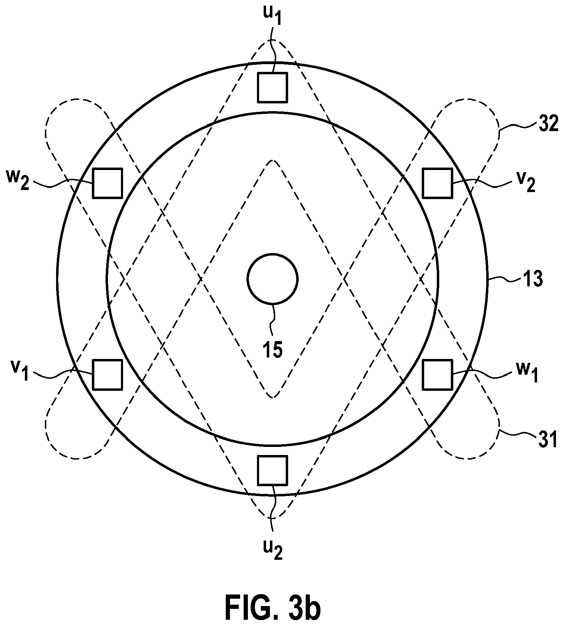

Fig. 3a und 3b zeigen zwei verschiedene Anordnungen von Wicklungsgruppen eines ersten und zweiten Teilsystems einer elektrischen Maschine beispielsweise nach Fig. 2 im Detail.

In den Fig. 3a und 3b sind jeweils Wicklungsgruppen 31, 32 des ersten und zweiten Teilsystems 21, 22 dargestellt, welche auf einem Stator 13 der elektrischen Maschine 10 und um einen Rotor 15 der elektrische Maschine 10 herum angeordnet sind. Die Wicklungsgruppen 31, 32 sind jeweils dreiphasig ausgestaltet und weisen daher jeweils eine Spule pro Phase auf. Folglich weist die erste Wicklungsgruppe 31 des ersten Teilsystems 21 je eine Spule für die Phasen $u_1$, $v_1$, und $w_1$ auf. Entsprechend weist die zweite Wicklungsgruppe 32 des zweiten Teilsystems 22 je eine Spule für die Phasen $u_2$, $v_2$ und $w_2$ auf. Die Spulen der Wicklungsgruppen 31, 32 sind in den Fig. 3a und 3b jeweils um 360° elektrisch versetzt zueinander angeordnet und führen aufgrund ihrer jeweiligen Anordnung lediglich zu unterschiedlichen Symmetrieeigenschaften der elektrischen Maschine 10 aufgrund der magnetischen Kopplung zwischen den einzelnen Spulen der jeweiligen Phasen.

**Patentansprüche**

1.  Verfahren zur Bestimmung einer Rotorlage einer elektrischen, rotierenden Maschine (10), wobei die elektrische Maschine (10) wenigstens ein erstes, mehrphasiges Teilsystem (21) und ein zweites, mehrphasiges Teilsystem (22) aufweist, wobei jedes Teilsystem (21, 22) jeweils eine Wicklungsgruppe (31, 32) und einen PWM-gesteuerten Wechselrichter (41, 42) zur Speisung der jeweiligen Wicklungsgruppe (31, 32) aufweist, wobei die Wicklungsgruppen (31, 32) des wenigstens ersten und zweiten Teilsystems (21, 22) im Wesentlichen um 360° elektrisch zueinander versetzt angeordnet sind, **gekennzeichnet durch** die Verfahrensschritte:

    Verändern von durch einen Regler zur Ansteuerung der a.
    Teilsysteme (21, 22) vorgegebenen Spannungen ($u_{control}$) zwischen einem ersten Reglerabtastschritt und einem zweiten Reglerabtastschritt, indem für jedes Teilsystem (21, 22) jeweils hochfrequente Spannungen ($u_{inj}$) zusätzlich zu den vorgegebenen Spannungen ($u_{control}$) eingespeist werden, um jeweils eine lageabhängige Stromänderung zu erzielen, wobei die hochfrequenten Spannungen ($u_{inj}$) des wenigstens ersten und zweiten Teilsystems (21, 22) derartig gewählt werden, dass sie eine verschobene Phasenlage zueinander aufweisen, und wobei die vorgegebenen Spannungen ($u_{control}$) des wenigstens ersten und zweiten Teilsystems (21, 22) derartig gewählt werden, dass sie eine im Wesentlichen gleiche Phasenlage zueinander aufweisen,
PWM-synchrones Messen wenigstens eines ersten Phasenstroms und eines zweib. ten Phasenstroms für jedes Teilsystem (21, 22) zwischen dem ersten Reglerabtastschritt und dem zweiten Reglerabtastschritt, um je einen Stromverlauf der Phasenströme zu erhalten,
c. Bestimmen der Rotorlage in Abhängigkeit von den im Verfahrensschritt b erhaltenen Stromverläufen und den im Verfahrensschritt a eingespeisten hochfrequenten Spannungen ($u_{inj}$).

**2.** Verfahren nach Anspruch 1, **dadurch gekennzeichnet, dass** im Verfahrensschritt a die hochfrequenten Spannungen ($u_{inj}$) des wenigstens ersten und zweiten Teilsystems (21, 22) derartig gewählt werden, dass die hochfrequenten Spannungen ($u_{inj}$) eine um ein n-faches von 360° geteilt durch die Anzahl der Teilsysteme (21, 22) verschobene Phasenlage zueinander aufweisen, wobei n eine ganze Zahl ist.

**3.** Verfahren nach Anspruch 1 oder 2, **dadurch gekennzeichnet, dass** im Verfahrensschritt a Amplituden der hochfrequenten Spannungen ($u_{inj}$) des wenigstens ersten und zweiten Teilsystems (21, 22) derartig gewählt werden, dass eine Summe aller Spannungszeiger der hochfrequenten Spannungen ($u_{inj}$) der Teilsysteme (21, 22) im rotorflussorientierten Koordinatensystem einen Nullvektor ergibt.

**4.** Verfahren nach einem der Ansprüche 1 bis 3, **dadurch gekennzeichnet, dass** im Verfahrensschritt c für das wenigstens erste und zweite Teilsystem die jeweilige Stromänderung, welche durch das Verändern der vorgegebenen Spannungen ($u_{control}$) entsteht, in Abhängigkeit des in Verfahrensschritt b erhaltenen Stromverlaufs der Phasenströme bestimmt wird, wobei der Stromverlauf in einen ersten Strom, welcher ohne Veränderung der vorgegebenen Spannung ($u_{control}$) fließen würde, und einen zweiten Strom, welcher durch das Einspeisen der hochfrequenten Spannungen ($u_{inj}$) erzeugt wird, unterteilt wird, und wobei in Abhängigkeit von der jeweilig bestimmten Stromänderung die Rotorlage bestimmt wird.

**5.** Verfahren nach Anspruch 4, **dadurch gekennzeichnet, dass** der zweite Strom, welcher durch das Einspeisen der hochfrequenten Spannungen ($u_{inj}$) erzeugt wird, bestimmt wird, indem eine Differenz der in Verfahrensschritt b erhaltenen Phasenströme des wenigstens ersten und des zweiten Teilsystems (21, 22) gebildet wird.

**6.** Verfahren nach Anspruch 4 oder 5, **dadurch gekennzeichnet, dass** der erste Strom, welcher ohne Veränderung der vorgegebenen Spannung ($u_{control}$) fließen würde, bestimmt wird, indem ein Mittelwert der in Verfahrensschritt b erhaltenen Phasenströme des wenigstens ersten und zweiten Teilsystems (21, 22) gebildet wird.

**7.** Verfahren nach einem der Ansprüche 1 bis 6, **dadurch gekennzeichnet, dass** eine Reglerabtastperiode, welche die Dauer zwischen dem ersten Reglerabtastschritt und dem zweiten Reglerabtastschritt darstellt, größer als eine PWM-Periode ist.

**8.** Verfahren nach einem der Ansprüche 1 bis 7, **dadurch gekennzeichnet, dass** die hochfrequenten Spannungen ($u_{inj}$) einen Frequenzbereich aufweisen, welcher sich oberhalb einer Resonanzfrequenz von an einem Gehäuse der elektrischen Maschine (10) erzeugbaren mechanischen Schwingungen befindet.

**9.** Elektrische, rotierende Maschine (10) mit wenigstens einem ersten mehrphasigen Teilsystem (21) und einem zweiten mehrphasigen Teilsystem (22), wobei jedes Teilsystem (21, 22) eine Wicklungsgruppe (31, 32) und einen PWM-gesteuerten Wechselrichter (41, 42) zur Speisung der jeweiligen Wicklungsgruppe (31, 32) aufweist, **dadurch gekennzeichnet, dass** die Wicklungsgruppen (31, 32) des wenigstens ersten und zweiten Teilsystems (21, 22) im Wesentlichen um 360° elektrisch zueinander versetzt angeordnet sind, **dadurch gekennzeichnet, dass** die elektrische Maschine (10) eine PWM-Einheit (70) aufweist, welche dazu eingerichtet ist, durch einen Regler zur Ansteuerung der Teilsysteme (21, 22) vorgegebenen Spannungen ($u_{control}$) zwischen einem ersten Reglerabtastschritt und einem zweiten Reglerabtastschritt zu verändern, indem für jedes Teilsystem (21, 22) jeweils hochfrequente Spannungen ($u_{inj}$) zusätzlich zu den vorgegebenen Spannungen ($u_{control}$) einspeisbar sind, um jeweils eine lageabhängige Stromänderung zu erzielen, und wobei die PWM-Einheit (70) dazu eingerichtet ist, die hochfrequenten Spannungen ($u_{inj}$) des wenigstens ersten und zweiten Teilsystems (21, 22) derartig auszuwählen, dass sie eine verschobene Phasenlage zueinander aufweisen, und die vorgegebenen Spannungen ($u_{control}$) des wenigstens ersten und zweiten Teilsystems (21, 22) derartig auszuwählen, dass sie eine im Wesentlichen gleiche Phasenlage zueinander aufweisen, wobei die elektrische Maschine eine Strommesssensoreinheit (55) aufweist, welche dazu eingerichtet ist, wenigstens einen ersten Phasenstrom und einen zweiten Phasenstrom für jedes Teilsystem (21, 22) zwischen dem ersten Reglerabtastschritt und dem zweiten Reglerabtastschritt PWM-synchron zu messen, um je einen Stromverlauf der Phasenströmen zu erhalten, und wobei die elektrische Maschine (10) eine Rotorlageeinheit (90) aufweist, welche dazu eingerichtet ist, die Rotorlage in Abhängigkeit von den erhaltenen Stromverläufen und den eingespeisten hochfrequenten Spannungen ($u_{inj}$) zu bestimmen.

10. Elektrische Maschine nach Anspruch 9, **dadurch gekennzeichnet, dass** die Wicklungsgruppen (31, 32) des wenigstens ersten und zweiten Teilsystems (21, 22) derartig miteinander verschalten sind, dass eine in einem rotorflussorientierten Koordinatensystem im Wesentlichen konstante Induktivitätsmatrix gegeben ist.

11. Elektrische Maschine nach Anspruch 9 oder 10, **dadurch gekennzeichnet, dass** das wenigstens erste und zweite Teilsystem (21, 22) einen gemeinsamen Spannungszwischenkreis (60) aufweisen.

**Claims**

1. Method for determining a rotor position of an electric rotating machine (10), wherein the electric machine (10) has at least one first multi-phase subsystem (21) and one second multi-phase subsystem (22), wherein each subsystem (21, 22) respectively has a winding group (31, 32) and a PWM-controlled inverter (41, 42) for feeding the respective winding group (31, 32), wherein the winding groups (31, 32) of the at least first and second subsystem (21, 22) are arranged electrically offset with respect to one another by essentially 360°, **characterized by** the method steps of:

   a. changing voltages ($u_{control}$) predefined by a controller for drive of the subsystems (21, 22) between a first controller sampling step and a second controller sampling step, in that for each subsystem (21, 22) respectively high-frequency voltages ($u_{inj}$) are injected as well as the predefined voltages ($u_{control}$) in order in each case to achieve a position-dependent current change, wherein the high-frequency voltages ($u_{inj}$) of the at least first and second subsystem (21, 22) are selected in such a way that they have a displaced phase position with respect to one another, and wherein the predefined voltages ($u_{control}$) of the at least first and second subsystem (21, 22) are selected in such a way that they have essentially the same phase position with respect to one another,

   b. PWM-synchronous measurement of at least one first phase current and of one second phase current for each subsystem (21, 22) between the first controller sampling step and the second controller sampling step in order in each case to obtain a current curve of the phase currents,

   c. determining the rotor position depending on the current curves obtained in method step b and the high-frequency voltages ($u_{inj}$) injected in method step a.

2. Method according to Claim 1, **characterized in that** in method step a the high-frequency voltages ($u_{inj}$) of the at least first and second subsystem (21, 22) are selected in such a way that the high-frequency voltages ($u_{inj}$) have a phase position offset with respect to one another by an n-multiple of 360° divided by the number of subsystems (21, 22), where n is an integer.

3. Method according to Claim 1 or 2, **characterized in that** in method step a amplitudes of the high-frequency voltages ($u_{inj}$) of the at least first and second subsystem (21, 22) are selected in such a way that a total of all the voltage vectors of the high-frequency voltages ($u_{inj}$) of the subsystems (21, 22) in the coordinate system oriented to rotor flux yields a zero vector.

4. Method according to one of Claims 1 to 3, **characterized in that** in method step c the respective current change for the at least first and second subsystem that arises from the changing of the predefined voltages ($u_{control}$) is determined depending on the current curve of the phase currents obtained in method step b, wherein the current curve is divided into a first current that would flow without changing the predefined voltage ($u_{control}$) and a second current that is generated through the injection of the high-frequency voltages ($u_{inj}$), and wherein the rotor position is determined depending on the current change determined in each case.

5. Method according to Claim 4, **characterized in that** the second current that is generated through the injection of the high-frequency voltages ($u_{inj}$) is determined **in that** a difference between the phase currents of the at least first and second subsystem (21, 22) obtained in method step b is formed.

6. Method according to Claim 4 or 5, **characterized in that** the first current that would flow without changing the predefined voltage ($u_{control}$) is determined **in that** a mean value of the phase currents of the at least first and second subsystem (21, 22) obtained in method step b is formed.

7. Method according to one of Claims 1 to 6, **characterized in that** a controller sampling period that represents the duration between the first controller sampling step and the second controller sampling step is greater than one PWM period.

8. Method according to one of Claims 1 to 7, **characterized in that** the high-frequency voltages ($u_{inj}$) have a frequency range that is located above a resonant frequency of mechanical vibrations that can be generated at a housing of the electric machine (10) .

9. Electric rotating machine (10) with at least one first multi-phase subsystem (21) and one second multi-phase subsystem (22), wherein each subsystem (21, 22) has a winding group (31, 32), and a PWM-controlled inverter (41, 42) for feeding the respective winding group (31, 32), **characterized in that** the winding groups (31, 32) of the at least first and second subsystem (21, 22) are arranged electrically offset with respect to one another by essentially 360°, **characterized in that** the electric machine (10) has a PWM unit (70) that is designed to change voltages ($u_{control}$) predefined by a controller for drive of the subsystems (21, 22) between a first controller sampling step and a second controller sampling step, **in that** for each subsystem (21, 22) respectively high-frequency voltages ($u_{inj}$) are able to be injected as well as the predefined voltages ($u_{control}$) in order in each case to achieve a position-dependent current change, and wherein the PWM unit (70) is designed to select the high-frequency voltages ($u_{inj}$) of the at least first and second subsystem (21, 22) in such a way that they have a displaced phase position with respect to one another, and to select the predefined voltages ($u_{control}$) of the at least first and second subsystem (21, 22) in such a way that they have essentially the same phase position with respect to one another, wherein the electric machine has a current measurement sensor unit (55) that is designed to PWM-synchronously measure at least one first phase current and one second phase current for each subsystem (21, 22) between the first controller sampling step and the second controller sampling step in order in each case to obtain a current curve of the phase currents, and wherein the electric machine (10) has a rotor position unit (90) that is designed to determine the rotor position depending on the obtained current curves and the injected high-frequency voltages ($u_{inj}$).

10. Electric machine according to Claim 9, **character-**

**ized in that** the winding groups (31, 32) of the at least first and second subsystem (21, 22) are connected to one another in such a way that an essentially constant inductance matrix is formed in a rotor-flux-oriented coordinate system.

11. Electric machine according to Claim 9 or 10, **characterized in that** the at least first and second subsystem (21, 22) have a common voltage intermediate circuit (60).

**Revendications**

1. Procédé de détermination d'une position de rotor d'une machine électrique tournante (10), la machine électrique (10) comportant au moins un premier sous-système polyphasé (21) et un deuxième sous-système polyphasé (22), chaque sous-système (21, 22) comportant un groupe d'enroulements (31, 32) et un onduleur (41, 42) commandé par PWM et destiné à alimenter le groupe d'enroulements respectif (31, 32), les groupes d'enroulements (31, 32) des au moins un premier et un deuxième sous-système (21, 22) étant disposés en étant décalés électriquement l'un de l'autre de 360°, **caractérisé par** les étapes de procédé suivantes :

   a. faire varier des tensions ($U_{control}$), spécifiées par un régulateur de commande des sous-systèmes (21, 22), entre une première étape de balayage de régulateur et une deuxième étape de balayage de régulateur par injection dans chaque sous-système (21, 22) de tensions à haute fréquence ($U_{inj}$), en plus des tensions spécifiées ($U_{control}$), afin d'obtenir une variation de courant en fonction de la position, les tensions à haute fréquence ($U_{inj}$) des au moins un premier et un deuxième sous-système (21, 22) étant sélectionnées de manière à présenter des positions de phase décalées l'une par rapport à l'autre, et les tensions spécifiées ($u_{control}$) des au moins un premier et un deuxième sous-système (21, 22) étant sélectionnées de manière à présenter sensiblement des positions de phase identiques l'une par rapport à l'autre,
   b. mesurer de manière synchrone par PWM au moins un premier courant de phase et un deuxième courant de phase pour chaque sous-système (21, 22) entre la première étape de balayage de régulateur et la deuxième étape de balayage de régulateur afin d'obtenir un profil de courant des courants de phase,
   c. déterminer la position du rotor en fonction des profils de courant obtenus à l'étape de procédé b et des tensions à haute fréquence ($U_{inj}$) injectées à l'étape de procédé a.

2. Procédé selon la revendication 1, **caractérisé en ce que**, à l'étape de procédé a, les tensions à haute fréquence ($U_{inj}$) des au moins un premier et un deuxième sous-système (21, 22) sont sélectionnées de manière à ce que les tensions à haute fréquence ($U_{inj}$) présentent des positions de phase décalées l'une de l'autre d'un multiple n de 360° divisé par le nombre de sous-systèmes (21, 22), n étant un nombre entier.

3. Procédé selon la revendication 1 ou 2, **caractérisé en ce que**, à l'étape de procédé a, les amplitudes des tensions à haute fréquence ($U_{inj}$) des au moins un premier et un deuxième sous-système (21, 22) sont sélectionnées de manière à ce qu'une somme de tous les vecteurs de tension des tensions à haute fréquence ($U_{inj}$) des sous-systèmes (21, 22) donne un vecteur nul dans le système de coordonnées à flux de rotor orienté.

4. Procédé selon l'une des revendications 1 à 3, **caractérisé en ce que**, à l'étape de procédé c, pour les au moins un premier et un deuxième sous-système la variation de courant respective, qui se produit en raison de la variation des tensions spécifiées ($U_{control}$), est déterminée en fonction du profil de courant des courants de phase qui est obtenu à l'étape de procédé b, le profil de courant étant divisé en un premier courant, qui circulerait sans faire varier la tension spécifiée ($U_{control}$), et un deuxième courant qui est généré par l'injection des tensions à haute fréquence ($U_{inj}$), et la position du rotor étant déterminée en fonction de la variation de courant respectivement déterminée.

5. Procédé selon la revendication 4, **caractérisé en ce que** le deuxième courant, qui est généré par l'injection des tensions à haute fréquence ($U_{inj}$), est déterminé par formation d'une différence entre les courants de phase, obtenus à l'étape de procédé b, des au moins un premier et un deuxième sous-système (21, 22).

6. Procédé selon la revendication 4 ou 5, **caractérisé en ce que** le premier courant, qui circulerait sans faire varier la tension spécifiée ($U_{control}$), est déterminé par formation d'une valeur moyenne des courants de phase, obtenus à l'étape de procédé b, des au moins un premier et un deuxième sous-système (21, 22).

7. Procédé selon l'une des revendications 1 à 6, **caractérisé en ce qu'**une période d'échantillonnage de régulateur, qui représente la durée entre la première étape de balayage de régulateur et la deuxième étape de balayage de régulateur, est supérieure à une période PWM.

8. Procédé selon l'une des revendications 1 à 7, **caractérisé en ce que** les tensions à haute fréquence ($U_{inj}$) ont une plage de fréquence qui est située au-dessus d'une fréquence de résonance de vibrations mécaniques pouvant être générées au niveau d'un boîtier de la machine électrique (10).

9. Machine électrique tournante (10) comprenant au moins un premier sous-système polyphasé (21) et un deuxième sous-système polyphasé (22), chaque sous-système (21, 22) comportant un groupe d'enroulements (31, 32) et un onduleur (41, 42) commandé par PWM et destiné à alimenter le groupe d'enroulements respectif (31, 32), **caractérisé en ce que** les groupes d'enroulements (31, 32) des au moins un premier et un deuxième sous-système (21, 22) sont disposés de manière décalée électriquement l'un par rapport à l'autre de sensiblement 360°, **caractérisé en ce que** la machine électrique (10) comporte une unité PWM (70) qui est conçue pour faire varier des tensions ($u_{control}$), spécifiées par un régulateur destiné à commander des sous-systèmes (21, 22), entre une première étape de balayage de régulateur et une deuxième étape de balayage de régulateur, par injection dans chaque sous-système (21, 22) de tensions à haute fréquence ($U_{inj}$), en plus des tensions spécifiées ($U_{control}$), afin d'obtenir une variation de courant en fonction de la position, et l'unité PWM (70) étant conçue pour sélectionner les tensions à haute fréquence ($U_{inj}$) des au moins un premier et un deuxième sous-système (21, 22) de manière à ce qu'elles présentent des positions de phase décalées l'une par rapport à l'autre, et pour sélectionner des tensions spécifiées ($U_{control}$) des au moins un premier et un deuxième sous-système (21, 22) de manière à ce qu'elles présentent des positions de phases sensiblement identiques l'une à l'autre, la machine électrique comportant une unité formant capteur de mesure de courant (55) qui est conçue pour mesurer au moins un premier courant de phase et un deuxième courant de phase pour chaque sous-système (21, 22) entre la première étape de balayage de régulateur et la deuxième étape de balayage de régulateur de manière synchrone par PWM afin d'obtenir à chaque fois un profil de courant des courants de phase, et la machine électrique (10) comportant une unité de position de rotor (90) qui est conçue pour déterminer la position du rotor en fonction des profils de courant obtenus et des tensions à haute fréquence ($U_{inj}$) injectées.

10. Machine électrique selon la revendication 9, **caractérisée en ce que** les groupes d'enroulements (31, 32) des au moins un premier et un deuxième sous-ensemble (21, 22) sont reliés entre eux de manière à donner une matrice d'inductance sensiblement constante dans un système de coordonnées à flux de rotor orienté.

**11.** Machine électrique selon la revendication 9 ou 10, **caractérisée en ce que** les au moins un premier et un deuxième sous-système (21, 22) comportent un circuit de tension intermédiaire commun (60).

**FIG. 1**

FIG. 2

FIG. 3a

FIG. 3b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009039672 A1
- US 2011101906 A1
- DE 202016106678 U1